# FASCICULE DE BREVET EUROPEEN

(11) **EP 2 672 133 B1**
(45) Date de publication et mention de la délivrance du brevet: **10.07.2019**
(21) Numéro de dépôt: 13168285.8
(22) Date de dépôt: 17.05.2013
(51) Int. Cl.: F16C 33/78, F16J 15/3232, F16J 15/3276, F03D 80/70, F16C 19/06

(54) **Dispositif d'étanchéité de roulement de grande dimension**
Dichtungsanordnung eines Großwälzlagers
Sealing device for a large rolling bearing

(30) Priorité: 04.06.2012 FR 1255170
(43) Date de publication de la demande: 11.12.2013
(73) Titulaire: Defontaine, 85530 La Bruffière (FR)
(72) Inventeur: Jacquemont, Eric, 44190 Clisson (FR); Delacou, Jean-Michel, 85290 Mortagne sur Sèvre (FR); Chatry, Didier, 85530 La Bruffière (FR)
(74) Mandataire: Novagraaf Technologies

(56) Documents cités:
- WO-A1-2010/043249
- DE-A1- 10 309 383
- DE-U- 1 940 357
- DE-U1-202010 014 830
- DE-U1-202011 109 164
- FR-A1- 2 479 374
- FR-A1- 2 672 098
- JP-A- 2003 262 230
- US-A1- 2011 103 728

## Description

La présente invention se rapporte à un dispositif d'étanchéité circulaire utilisé en particulier sur les couronnes comprenant des roulements comme par exemple celles de pales d'éoliennes.

Le document FR 2 479 374 A1 divulgue un roulement avec un dispositif d'étanchéité avec les caractéristiques du préambule de la revendication 1.

Les documents DE 20 2010 014 830 U1, US 2011 103 728 A1, WO 2010 043 249 A1, DE 103 09 383 A1 (D7), DE 20 2011 109 164 U1 concernent des roulements avec un dispositif d'étanchéité avec plusieurs lèvres utilisé dans une couronne de pales d'éolienne ou apte à l'utilisation dans un roulement d'éolienne.

Ces dispositifs comprennent en général deux pièces d'étanchéité circulaires généralement en caoutchouc, une bague intérieure et une bague extérieure concentrique à la première bague. Les pièces d'étanchéité sont fixées de façon symétrique, la première au dessus et en appui sur l'une des bagues, la deuxième en dessous et en appui sur l'autre bague et placée entre les deux bagues. Elles comprennent une lèvre placée en appui sur la face extérieure de la bague mobile par rapport à leur fixation respective.

Il y a deux joints par roulement, un joint inférieur qui se fixe sur la surface de la bague en appui sur le support fixe et un joint supérieur qui se fixe sur l'autre bague sur la surface qui est généralement également en contact avec le support mobile.

Cependant ces dispositifs ne sont pas suffisamment fiables car la pression du produit lubrifiant interne au roulement peut entraîner l'expulsion de la lèvre, l'étanchéité n'est alors plus réalisée ce qui crée des fuites vers l'extérieur. Pour des raisons purement écologiques et esthétiques, la graisse qui coule sur les pales ou le moyeu d'une éolienne donne une impression et une réalité de pollution néfaste à l'image de propreté de l'éolien. Ceci est d'autant plus critique que ces dispositifs ont de grandes dimensions et que les quantités de lubrifiant en cause peuvent être importantes. Par exemple, les couronnes de pales d'éolienne de plusieurs méga watts qui ont des diamètres de plusieurs mètres , 2 à 6 m aujourd'hui, certainement plus dans un futur proche.

La présente invention se propose de résoudre ce problème par un roulement avec dispositif d'étanchéité comprenant une pièce circulaire d'étanchéité, une bague intérieure et une bague extérieure, l'une des deux bagues pouvant tourner par rapport à un axe, la pièce circulaire étant disposé entre les deux bagues et comprenant deux lèvres circulaires disposées dans une gorge perpendiculaire à l'axe de rotation, prévue sur la face d'une des bagues, une première lèvre du côté extérieur au roulement et une deuxième lèvre du côté intérieur au roulement s'étendant sensiblement perpendiculairement à la première lèvre, ladite deuxième lèvre a une courbure dirigée vers l'espace de roulement entre les deux bagues et une troisième lèvre circulaire en appui sur ladite face de la bague, un profil de fixation est fixé dans une gorge aménagé dans l'autre bague. Les deux premières lèvres sont précontraintes dans la gorge. Quand la bague mobile, sous l'effet de la charge se décale axialement ou bascule, les deux lèvres suivent ce mouvement l'une étant poussée par l'autre quelque soit le sens du déplacement. Les débattements radiaux de la bague mobile n'ont pas d'influence sur l'efficacité des deux lèvres, la première lèvre ayant un glissement radial totalement libre dans la gorge dont les flancs sont sensiblement perpendiculaires à l'axe de rotation de la couronne. La troisième lèvre sert de joint ordinaire pour protéger le roulement de la pénétration des poussières ou corps étrangers extérieurs. La base de la troisième lèvre a une liaison avec le pion de fixation du joint, la liaison est suffisamment souple pour suivre les désaxements de la bague mobile sans trop d'augmentation de pression dans une direction ou de perte de contact dans l'autre direction évitant ainsi toute pénétration de corps étrangers pouvant polluer la graisse et les pistes de roulement. La deuxième lèvre, situé à l'intérieur, sous l'effet de la pression de la graisse se déroule vers le fond de la gorge, son rayon de courbure augmente ce qui augmente la pression de contact de la première lèvre du fait de sa position orthogonale. La pression des deux lèvres situées dans la gorge sur les flancs de cette gorge augmente et ainsi l'efficacité de l'étanchéité. Ainsi, la pression des lèvres s'adapte à la pression régnant à l'intérieur du roulement, quand la pression de la graisse est faible, il y a une faible pression de contact des lèvres sur les faces de la gorges et inversement si pression augmente la pression des lèvres augmente.

Selon une caractéristique particulière, la troisième lèvre est placée à l'extérieur des deux autres lèvres. La lèvre empêche ainsi toute entrée de polluant dans la gorge. La troisième lèvre est un cache poussière qui évite la pollution des deux précédents contacts et qui créé une réserve de graisse (apport de graisse au montage) assurant une lubrification de la lèvre intermédiaire.

Selon une autre caractéristique, la gorge présente deux flancs parallèles. La gorge est ainsi plus facile à réaliser.

Selon une disposition particulière, le profil de fixation est un profil sapin.

Selon une autre caractéristique, la première lèvre est en appui sur le flanc du côté extérieur au roulement de la gorge.

Selon une autre caractéristique, la deuxième lèvre est en appui sur le flanc du côté intérieur au roulement de la gorge. La pression de la graisse en poussant sur la deuxième lèvre augmente la pression sur la première lèvre d'où une meilleure tenue en pression

Selon une caractéristique complémentaire, la pièce circulaire d'étanchéité comprend un talon en appui sur une face intérieure de la bague extérieure ou sur une face extérieure de la bague intérieure. Cette lèvre permet de maintenir en place le pion sur ladite bague.

Selon une autre caractéristique, la bague présente une aspérité périphérique qui coopère avec le talon. L'aspérité périphérique est placée sur la face de la bague et assure un blocage complet du talon sur ladite bague.

Selon une caractéristique particulière, la pièce circulaire d'étanchéité présente une restriction dans une zone qui relie les deux lèvres à la troisième lèvre qui permet d'assouplir le mouvement de suivi des oscillations axiales de la bague mobile.

L'invention concerne aussi une couronne de pales d'éolienne équipée d'un roulement avec dispositif d'étanchéité présentant une ou plusieurs des caractéristiques précédentes.

D'autres avantages pourront encore apparaître à l'homme du métier à la lecture de l'exemple ci-dessous, illustré par la figure annexée, donnés uniquement à titre illustratif.
- La figure 1 représente un vue en coupe du dispositif d'étanchéité selon l'invention,
- La figure 2 montre un roulement en coupe.

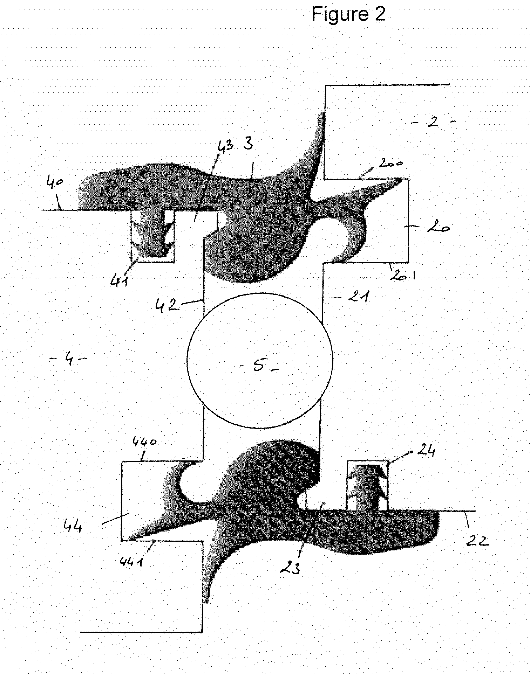

On considérera dans la suite de la description que les adjectifs supérieur et inférieur se rapportent à la figure 2, le haut est situé en haut de la figure et le bas en bas, l'intérieur est situé à droite de la figure et l'extérieur à gauche.

Le dispositif d'étanchéité 1 selon l'invention comprend une bague intérieure 2 et une bague extérieure 4, entre les deux bagues est disposée une première et une deuxième pièce circulaire d'étanchéité 3 ou joint d'étanchéité. L'axe des bagues est commun (non représenté) et situé dans la partie droite de la figure 2. On considérera que l'axe des bagues constitue le centre du dispositif d'étanchéité et que le lubrifiant est placé entre les deux pièces circulaires d'étanchéité 3.

La bague intérieure 2 présente sur sa face extérieure 21 une gorge 20 circulaire. La gorge 20 a deux flancs : un flanc supérieur 200 et un flanc inférieur 201. Les deux flancs 200 et 201 sont parallèles et perpendiculaire à l'axe des bagues. Ils pourraient être inclinés sans sortir du cadre de l'invention.

De la même façon, la bague extérieure 4, comme visible dans la figure 2, présente sur sa face intérieure 42 une gorge 44 circulaire. La gorge 44 étant symétrique à la gorge 20 ne sera pas plus décrite. La gorge 44 comprend un flanc 441 qui correspond au flanc 200, et un flanc 440 qui correspond au flanc 201.

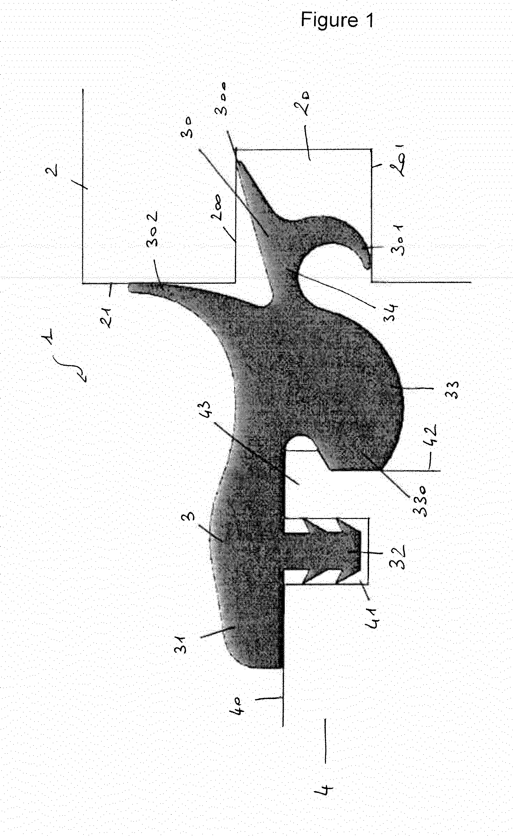

La première pièce d'étanchéité 3, comme visible dans la figure 1, a sur sa partie intérieure 30 deux lèvres 300 et 301 circulaires. La lèvre supérieure 300 est en appui sur le flanc supérieur 200 de la gorge 20, et la lèvre inférieure 301 est en appui sur le flanc inférieur 201 de la gorge 20. Les deux lèvres sont perpendiculaires entre elles. La lèvre supérieure 300 est sensiblement parallèle au flanc supérieur 200, alors que la lèvre inférieure 301 est sensiblement perpendiculaire au flanc inférieur 201 et présente une courbure dirigée vers l'espace de roulement entre les deux bagues 2 et 4. Sous l'effet de la pression du produit lubrifiant, la lèvre 301 a tendance à se dérouler mais la largeur de la gorge circulaire 41 est telle que le déroulement complet est impossible. Cette pression créée également un effort radial qui favorise l'enfoncement des lèvres 300 et 301 vers le fond de la gorge s'opposant à l'extrusion desdites lèvres sous la pression.

La deuxième pièce d'étanchéité 3 est placée de la même façon dans la gorge 44.

Une troisième lèvre 302 de la première pièce d'étanchéité 3 est située au dessus des deux autres lèvres 300 et 301. Ladite lèvre 302 est en appui sur la face extérieure 21 de la bague intérieure 2 et la face intérieure 42 de la bague extérieure 4.

Les deux lèvres 300 et 301 sont reliées au corps de la pièce circulaire 3 par une zone 34 qui est plus étroite pour faciliter le mouvement desdites lèvres 300 et 301.

La première pièce d'étanchéité 3 présente dans sa partie extérieure 31 un profil 32 orienté vers le bas dans la figure 2 pour coopérer avec la gorge 41, il est orienté vers le haut pour la deuxième pièce d'étanchéité 3 et la gorge 24. Le profil 32 est un profil sapin.

La pièce d'étanchéité 3 a également un talon 330 situé dans la partie centrale 33 de ladite pièce 3. Ce talon 330 est orienté vers la face 21 ou la face 42 et coopère avec ladite face 21 ou 42 de la bague 2 ou 4. La face 21 ou 42 présente une aspérité périphérique 23 ou 43 sur laquelle le talon 330 vient prendre appui et qui a un effet de retenu anti extrusion du profil 32 de la gorge 41.

L'aspérité 23 ou 43 présente un bord sensiblement parallèle au talon 330.

Comme indiqué précédemment, différentes variantes sont couvertes par la présente invention que le joint soit fixé sur la bague mobile, sur la bague fixe, comme celle ou que les lèvres soient orientées vers le centre ou vers l'extérieur de la couronne.

## Revendications

1. Roulement avec dispositif d'étanchéité (1) comprenant au moins une pièce circulaire d'étanchéité (3), une bague intérieure (2) et une bague extérieure (4), l'une des deux bagues pouvant tourner par rapport à un axe, la pièce circulaire (3) étant disposé entre les deux bagues (2, 4), dans lequel la pièce circulaire (3) comprend deux lèvres circulaires (300, 301) disposées dans une gorge (20, 44) perpendiculaire à l'axe de rotation, prévue sur la face (21, 42) d'une des bagues (2, 4), une première lèvre (300) du côté extérieur au roulement et une deuxième lèvre (301) du côté intérieure au roulement s'étendant sensiblement perpendiculairement à la première lèvre (300) et une troisième lèvre circulaire (302) en appui sur ladite face (21, 42) de la bague (2, 4), un profil de fixation (32) est fixé dans une gorge (41, 24) aménagée dans l'autre bague (4, 2), **caractérisé en ce que** ladite deuxième lèvre (301) a une courbure dirigée vers l'espace de roulement entre les deux bagues (2, 4).

2. Roulement avec dispositif d'étanchéité selon la revendication précédente **caractérisé en ce que** la troisième lèvre (302) est placée à l'extérieur des deux autres lèvres (300, 301).

3. Roulement avec dispositif d'étanchéité selon une des revendications précédentes **caractérisé en ce que** la gorge (20, 44) présente deux flancs (200 et 201, 440 et 441) parallèles.

4. Roulement avec dispositif d'étanchéité selon une des revendications précédentes **caractérisé en ce que** le profil de fixation (32) est un profil sapin.

5. Roulement avec dispositif d'étanchéité selon une des revendications précédentes **caractérisé en ce que** la première lèvre (300) est en appui sur le flanc (200, 441) du côté extérieur de la gorge (20, 44).

6. Roulement avec dispositif d'étanchéité selon la revendication précédente **caractérisé en ce que** la deuxième lèvre (301) est en appui sur le flanc (201, 440) du côté intérieur de la gorge (20, 40).

7. Roulement avec dispositif d'étanchéité selon une des revendications précédentes **caractérisé en ce que** la pièce circulaire d'étanchéité (3) comprend un talon (330) en appui sur une face intérieure (42) de la bague extérieure (4) ou sur une face extérieure (21) de la bague intérieure (2).

8. Roulement avec dispositif d'étanchéité selon la revendication précédente **caractérisé en ce que** la bague (2, 4) présente une aspérité périphérique (23, 43) qui coopère avec le talon (330).

9. Roulement avec dispositif d'étanchéité selon une des revendications précédente **caractérisé en ce que** la pièce circulaire d'étanchéité (3) présente une restriction dans une zone (34) qui relie les deux lèvres (300, 301) à la troisième lèvre (302).

10. Couronne de pales d'éolienne **caractérisée en ce qu'**elle est équipée d'un roulement avec dispositif d'étanchéité selon une des revendications précédentes.

## Patentansprüche

1. Lager mit Abdichtvorrichtung (1), die mindestens ein kreisförmiges Abdichtteil (3), einen Innenring (2) und einen Außenring (4) umfasst, wobei einer der zwei Ringe bezüglich einer Achse drehen kann, wobei das kreisförmige Teil (3) zwischen den zwei Ringen (2, 4) angeordnet ist, wobei das kreisförmige Teil (3) zwei kreisförmige Lippen (300, 301) umfasst, die in einer Nut (20, 44) senkrecht zu der Rotationsachse angeordnet sind, die auf der Fläche (21, 42) eines der Ringe (2, 4) vorgesehen ist, eine erste Lippe (300) auf der Außenseite des Lagers, und eine zweite Lippe (301) auf der Innenseite des Lagers, die sich im Wesentlichen senkrecht zu der ersten Lippe (300) erstreckt, und eine dritte kreisförmige Lippe (302) in Auflage auf der Fläche (21, 42) des Rings (2, 4), ein Befestigungsprofil (32) in einer Nut (41, 24) befestigt ist, die in dem anderen Ring (4, 2) eingerichtet ist, **dadurch gekennzeichnet, dass** die zweite Lippe (301) eine Krümmung aufweist, die zu dem Laufraum zwischen den zwei Ringen (2, 4) gerichtet ist.

2. Lager mit Abdichtvorrichtung nach dem vorstehenden Anspruch, **dadurch gekennzeichnet, dass** die dritte Lippe (302) außerhalb der zwei anderen Lippen (300, 301) platziert ist.

3. Lager mit Abdichtvorrichtung nach einem der vorstehenden Ansprüche, **dadurch gekennzeichnet, dass** die Nut (20, 44) zwei parallele Flanken (200 und 201, 440 und 441) aufweist.

4. Lager mit Abdichtvorrichtung nach einem der vorstehenden Ansprüche, **dadurch gekennzeichnet, dass** das Befestigungsprofil (32) ein Tannenbaumprofil ist.

5. Lager mit Abdichtvorrichtung nach einem der vorstehenden Ansprüche, **dadurch gekennzeichnet, dass** die erste Lippe (300) auf der Flanke (200, 441) auf der Außenseite der Nut (20, 44) in Auflage ist.

6. Lager mit Abdichtvorrichtung nach dem vorstehenden Anspruch, **dadurch gekennzeichnet, dass** die zweite Lippe (301) auf der Flanke (201, 440) auf der Innenseite der Nut (20, 40) in Auflage ist.

7. Lager mit Abdichtvorrichtung nach einem der vorstehenden Ansprüche, **dadurch gekennzeichnet, dass** das kreisförmige Abdichtteil (3) einen Absatz (330) in Auflage auf einer Innenfläche (42) des Außenrings (4) oder auf einer Außenfläche (21) des Innenrings (2) umfasst.

8. Lager mit Abdichtvorrichtung nach dem vorstehenden Anspruch, **dadurch gekennzeichnet, dass** der Ring (2, 4) eine umfängliche Rauigkeit (23, 43) aufweist, die mit dem Absatz (330) zusammenwirkt.

9. Lager mit Abdichtvorrichtung nach einem der vorstehenden Ansprüche, **dadurch gekennzeichnet, dass** das kreisförmige Abdichtteil (3) eine Einschnürung in einer Zone (34), die die zwei Lippen (300, 301) mit der dritten Lippe (302) verbindet, aufweist.

10. Schaufelkranz einer Windkraftanlage, **dadurch gekennzeichnet, dass** er mit einem Lager mit Abdichtvorrichtung nach einem der vorstehenden Ansprüche ausgestattet ist.

## Claims

1. Bearing with a sealing device (1) comprising at least one sealing circular piece (3), an inner ring (2) and an outer ring (4), one of the two rings being able to rotate relative to an axis, the circular piece (3) being arranged between the two rings (2, 4), wherein the circular piece (3) comprises two circular lips (300, 301) arranged in a groove (20, 44) at right angles to the rotation axis, provided on the face (21, 42) of one of the rings (2, 4), a first lip (300) on the outside of the bearing and a second lip (301) on the inside of the bearing extending substantially at right angles to the first lip (300), and a third circular lip (302) pressing on said face (21, 42) of the ring (2, 4), and a fixing profile (32) is fixed in a groove (41, 24) formed in the other outer ring (4, 2) **characterised in that** said second lip (301) has a radius of curvature directed towards the interior between the two rings (2, 4).

2. Bearing with a sealing device according to the preceding claim, **characterized in that** the third lip (302) is placed above the other two lips (300, 301).

3. Bearing with a sealing device according to one of the preceding claims, **characterized in that** the groove (20, 44) has two parallel flanks (200 and 201, 440 and 441).

4. Bearing with a sealing device according to one of the preceding claims, **characterized in that** the fixing profile (32) is a fir tree profile.

5. Bearing with a sealing device according to one of the preceding claims, **characterized in that** the first lip (300) presses on the side (200, 441) on the outside of the groove (20, 44).

6. Bearing with a sealing device according to the preceding claim, **characterized in that** the second lip (301) presses on the side (201, 440) on the inside of the groove (20, 40).

7. Bearing with a sealing device according to one of the preceding claims, **characterized in that** the sealing circular piece (3) comprises an edge (330) pressing on an inner face (42) of the outer ring (4) or an outer face (21) of the inner ring (2).

8. Bearing with a sealing device according to the preceding claim, **characterized in that** the ring (2, 4) has a peripheral bump (23, 43) which cooperates with the edge (330).

9. Bearing with a sealing device according to one of the preceding claims, **characterized in that** the sealing circular piece (3) has a restriction in an area (34) which links the two lips (300, 301) to the third lip (302).

10. Wind turbine blade crown ring, **characterized in that** it is equipped with a bearing with a sealing device according to one of the preceding claims.
